# FASCICULE DE BREVET EUROPEEN

(11) **EP 3 188 899 B1**
(45) Date de publication et mention de la délivrance du brevet: **11.07.2018**
(21) Numéro de dépôt: 15770563.3
(22) Date de dépôt: 01.09.2015
(51) Int. Cl.: B29C 70/44, B29C 65/00, B29C 35/02

(54) **PIÈCE COMPOSITE THERMODURCISSABLE PRÉ-POLYMÉRISÉE ET PROCÉDÉS DE RÉALISATION D'UNE TELLE PIÈCE**
VORPOLYMERISIERTES WÄRMEHÄRTBARES VERBUNDTEIL UND VERFAHREN ZUR HERSTELLUNG SOLCH EINES TEILS
PRE-POLYMERIZED THERMOSETTING COMPOSITE PART AND METHODS FOR MAKING SUCH A PART

(30) Priorité: 03.09.2014 FR 1458237
(43) Date de publication de la demande: 12.07.2017
(73) Titulaire: Airbus Group SAS, 31700 Blagnac (FR)
(72) Inventeur: CAVALIERE, Frédérick, F-78180 Montigny Le Bretonneux (FR); PARIS, Christophe, F-75015 Paris (FR); ALIAGA, Daniel, F-93300 Aubervilliers (FR)
(74) Mandataire: Ipside
(86) Numéro de dépôt international: PCT/FR2015/052313
(87) Numéro de publication internationale: WO 2016/034809

(56) Documents cités:
- EP-A2- 2 732 957
- FR-A1- 2 909 919
- FR-A1- 3 001 408
- US-A1- 2010 124 659
- US-A1- 2014 144 568

## Description

### Domaine de l'invention

La présente invention appartient au domaine des pièces réalisées en matériau composite à résine thermodurcissable. Elle concerne notamment une pièce en matériau composite à renfort fibreux pré-polymérisées. Elle concerne également des procédés de fabrication d'une telle pièce.

L'invention est notamment adaptée à la réalisation de pièces structurales dans le domaine aéronautique, telles que des pièces monolithiques raidies ou toutes autres pièces structurales d'aéronef ou d'hélicoptère en matériau composite devant être assemblées (panneaux de fuselage, panneaux de voilure, raidisseurs, cadres, nervures, longerons, pales, ...).

### Etat de la technique

Le document EP 2 732 957 A2 décrit une pièce en matériau composite à renfort fibreux selon le préambule de la revendication 1 ainsi qu'un procédé de fabrication de cette pièce.

Les matériaux composites sont aujourd'hui largement utilisés pour la fabrication de pièces dans de nombreux domaines industriels, tels que le domaine aéronautique, y compris pour les pièces structurales, c'est-à-dire devant supporter des efforts significatifs lors de leur utilisation.

Un matériau composite est généralement constitué d'un renfort fibreux et une résine dont l'association permet d'obtenir un complexe dont les propriétés surpassent celles des matériaux de départ. Ainsi, les pièces en matériau composite présentent de nombreux avantages liés notamment à leurs propriétés de résistance, légèreté et facilité de mise en forme.

Le procédé le plus couramment utilisé pour la réalisation d'une pièce en matériau composite thermodurcissable consiste à réaliser une structure par empilement de couches ou plis de renfort de fibres pré-imprégnées d'une résine thermodurcissable, dite préforme fibreuse pré-imprégnée, avec des caractéristiques et selon une forme adaptée à celle de la pièce en matériau composite finale à réaliser, puis à durcir la résine, par polymérisation, sous une bâche à vide, dans un autoclave ou une étuve. La pièce obtenue présente, sur toute son épaisseur, un même taux de polymérisation.

Un autre procédé également très employé pour la réalisation d'une telle pièce consiste essentiellement à diffuser, de manière uniforme, par injection ou infusion, de la résine, thermodurcissable, à l'intérieur d'une préforme fibreuse, cette fois-ci initialement sèche, présentant la forme de la pièce à réaliser. Après évacuation des gaz et répartition de la résine, cette dernière est durcie, par polymérisation, dans un moule ou une bâche à vide, pour donner la pièce en matériau composite souhaitée. Ce procédé est dit RTM (Resin Transfert Molding) ou LRI (Liquid Resin Infusion). De même que pour le procédé précédent, la pièce obtenue présente, sur toute son épaisseur, un même taux de polymérisation.

Certaines pièces structurales d'aéronef sont réalisées à partir de pièces individuelles, réalisées par un des procédés précédemment cités, et assemblées les unes contre les autres par collage. Par exemple les panneaux de fuselage ou de voilure sont constitués d'un assemblage d'une peau et de raidisseurs.

Trois procédés d'assemblage par collage sont utilisés en aéronautique :
- le procédé de collage par co-cuisson, couramment appelé « co-curing » (terminologie anglo-saxonne) ; il consiste en l'assemblage par polymérisation de deux pièces non polymérisées, la jonction entre les deux pièces se faisant avec ou sans film adhésif ;
- le procédé de collage par co-collage ou « co-bonding » (terminologie anglo-saxonne); il consiste en l'assemblage par polymérisation d'une pièce polymérisée et d'une pièce non polymérisée, la jonction entre les deux pièces se faisant par un film adhésif ;
- le procédé de collage par « secondary-bonding » (terminologie anglo-saxonne) ; il consiste en l'assemblage par collage de deux pièces polymérisées, la jonction entre les deux pièces se faisant par un film adhésif.

Le procédé de collage par co-cuisson présente l'avantage de ne pas nécessiter de préparation de surface par ponçage et nettoyage des pièces avant assemblage. Il apporte de plus une bonne tenue mécanique à l'ensemble final.

Les procédés de collage par co-collage et « secondary bonding » présentent l'avantage, au contraire du procédé de collage par co-cuisson, de simplifier les opérations de fabrication, de stockage, de manipulation et de contrôle non destructif des pièces élémentaires polymérisées avant collage. Ils présentent également une bonne tenue mécanique de l'ensemble final.

Bien que satisfaisants, ces procédés existants présentent chacun de nombreux inconvénients, entre autres :
- pour les procédés de collage par co-collage et « secondary bonding » :
   ∘ un manque de fiabilité de la liaison collée, c'est-à-dire une apparition possible d'un collage ayant une faible, voire très faible tenue mécanique au niveau de la liaison, aussi appelé « kissing bond » (terminologie anglo-saxonne) ;
   ∘ une impossibilité à détecter ces kissing bonds par un contrôle non destructif et donc une impossibilité à détecter les pièces présentant une faible tenue mécanique au niveau de la liaison collée ;
   ∘ la nécessité d'une préparation de surface des pièces ;
   ∘ le recours à des fixations pour supprimer le risque de décollement à l'interface de collage ;
- pour le procédé de collage par co-cuisson :
   ∘ une mise en oeuvre complexe des outillages et dans la manipulation des pièces non polymérisées et par conséquent un coût de réalisation de l'assemblage de deux pièces élevé ;
   ∘ un stockage des pièces non polymérisées dans des conditions spécifiques (généralement à -18°C) avant collage ;
   ∘ une réalisation des opérations de contrôle non destructif après assemblage et polymérisation, et par conséquent une complexité et un coût de contrôle de l'assemblage élevés ;

Il existe par conséquent un besoin pour proposer une solution permettant de réaliser des collages entre deux pièces présentant une bonne tenue mécanique, et une fiabilité de la liaison collée semblable à celle obtenue avec le procédé de collage par co-cuisson, tout en présentant une plus grande facilité de mise en oeuvre afin de diminuer les coûts.

### Exposé de l'invention

La présente invention se propose de réaliser une pièce en matériau composite à renfort fibreux dite pré-polymérisée.

La présente invention concerne une pièce en matériau composite à renfort fibreux comportant une structure formée d'un ensemble de fibres maintenues dans une résine thermodurcissable et un tissu d'arrachage sur tout ou partie d'une surface extérieure de la structure. La pièce se caractérise par un gradient de polymérisation au niveau d'une interface entre la structure et le tissu d'arrachage.

Le tissu d'arrachage, communément dénommé « peel ply » en terminologie anglo-saxonne, est un tissu de protection de la surface extérieure de la pièce jusqu'à l'opération de collage. Il est positionné en surface de la pièce avant polymérisation, à l'emplacement où celle-ci doit être ultérieurement assemblée, par collage, avec une autre pièce. Il se retire aisément après polymérisation, par simple pelage, juste avant l'opération de collage.

Par gradient de polymérisation, on entend que le taux de polymérisation de la pièce varie en fonction du point où l'on se situe dans l'épaisseur de ladite pièce.

La pièce selon l'invention est telle que le gradient de polymérisation est uniquement à l'interface entre la structure et le tissu d'arrachage. Le gradient de polymérisation est décroissant depuis la surface extérieure de la structure vers le tissu d'arrachage.

Dans la zone de gradient, la résine présente un taux de polymérisation bas sur, au plus, quelques dizaines de µm d'épaisseur à l'interface. Par taux de polymérisation bas, on entend un taux de polymérisation inférieur à 40%.

Contrairement aux pièces actuelles, obtenues par les procédés existants, où la polymérisation est uniforme sur toute l'épaisseur de la pièce, c'est-à-dire où le taux de polymérisation est le même quelque soit le point où l'on se situe dans l'épaisseur de la pièce, même à l'interface structure-tissu d'arrachage, la pièce suivant l'invention est polymérisée uniformément, sauf en surface, à l'interface structure-tissu d'arrachage.

La présence d'un tel gradient de polymérisation est particulièrement avantageuse, en ce sens qu'une telle pièce, bien qu'ayant déjà subi une polymérisation, peut être collée ultérieurement par co-cuisson, ce qui ne peut être nullement réalisée avec des pièces polymérisées existantes. Selon l'invention, la pièce est une pièce polymérisée, au niveau de la structure, à au moins 75%.

L'invention concerne aussi un procédé de réalisation d'une pièce en matériau composite à renfort fibreux telle que précédemment décrite dans au moins l'un de ses modes de réalisation, comportant les étapes de :
- réalisation d'une préforme fibreuse pré-imprégnée d'une résine non polymérisée, obtenue essentiellement par un pli ou un empilement de plis,
- dépôt d'un tissu fibreux pré-imprégné d'une résine non polymérisée et exempte d'agent durcisseur ou faiblement chargée en agent durcisseur, sur tout ou partie d'une surface d'un pli extérieur,
- polymérisation de l'ensemble, préforme fibreuse et tissu fibreux, donc de la résine contenue dans la préforme fibreuse.

A l'issue de l'étape de polymérisation, la préforme est maintenue dans la résine et constitue la structure de la pièce finale polymérisée et le tissu fibreux est lié à la structure et constitue le tissu d'arrachage. Un gradient de polymérisation est obtenu à l'interface entre la structure et le tissu d'arrachage.

La résine dont est imprégnée la préforme comporte un agent durcisseur destiné à permettre la polymérisation de ladite résine lors de l'étape de polymérisation.

La résine thermodurcissable est par exemple de type époxy.

La résine imprégnée du tissu fibreux étant exempte d'agent durcisseur ou faiblement chargée en agent durcisseur, elle se polymérise donc peu lors de l'étape de polymérisation, à la température de polymérisation de la résine thermodurcissable de la préforme.

Par faiblement chargé en agent durcisseur, on entend de 1% à 30% en masse de la quantité nominale de durcisseur préconisée par les fournisseurs.

Cette quantité nominale de durcisseur à mélanger à la résine, préconisée par les fournisseurs varie selon les produits. Cela peut aller par exemple de 10% en masse de durcisseur à rajouter à la résine, donc un ratio massique de 100:10, jusqu'à 100% en masse de durcisseur à rajouter à la résine. Dans ce cas, on obtient un ratio massique de 1:1, il y a autant de durcisseur, en masse, que de résine.

En d'autres termes, le dosage de l'agent durcisseur dans la constitution de la résine du tissu fibreux est défini de telle sorte que, une fois la pièce polymérisée, l'interface entre la structure et le tissu d'arrachage soit très peu polymérisée, mais suffisamment polymérisée pour que le tissu d'arrachage adhère légèrement sur la surface extérieure de la structure et ne se décolle pas volontairement sans aide extérieure. Eventuellement, le tissu d'arrachage présente un aspect sec en surface extérieure.

Dans un exemple de mise en oeuvre du procédé, la résine contenue dans la préforme et celle contenue dans le tissu fibreux sont identiques. Elle ne diffère l'une de l'autre que par la présence ou l'absence de l'agent durcisseur.

Un tel procédé de réalisation de pièces est particulièrement intéressant en ce qu'il modifie très peu le procédé classique associé existant. Seul le tissu fibreux est ici modifié. Le tissu fibreux sec généralement employé est remplacé par un tissu fibreux imprégné d'une résine exempte d'agent durcisseur ou faiblement chargée en agent durcisseur. Selon le procédé, la résine thermodurcissable contenue dans la préforme fibreuse est polymérisée à un taux supérieur ou égal à 75%.

L'invention concerne aussi un procédé de réalisation d'une pièce en matériau composite à renfort fibreux telle que précédemment décrite dans au moins l'un de ses modes de réalisation. L'invention comporte les étapes de :
- réalisation d'une préforme fibreuse pré-imprégnée d'une résine thermodurcissable non polymérisée, ladite préforme étant obtenue essentiellement par un pli ou un empilement de plis,
- dépôt d'une couche intermédiaire de résine, ladite résine étant non polymérisée et exempte d'agent durcisseur ou faiblement chargée en agent durcisseur, sur tout ou partie d'une surface d'un pli extérieur de la préforme,
- dépôt d'un tissu fibreux sec sur la couche intermédiaire de résine, qui s'imprègne donc de la résine de la couche intermédiaire.
- polymérisation de l'ensemble, préforme fibreuse, couche intermédiaire de résine et tissu fibreux, donc de la résine thermodurcissable contenue dans la préforme fibreuse.

Par tissu fibreux sec, on entend un pli ou un empilement de pli non pré-imprégné de résine thermodurcissable.

Il est par exemple constitué de fibres de nylon, polyester ou verre.

A l'issue de l'étape de polymérisation, la préforme est maintenue dans la résine et constitue la structure de la pièce finale polymérisée et le tissu fibreux est lié à la structure et constitue le tissu d'arrachage. Un gradient de polymérisation est obtenu à l'interface entre la structure et le tissu d'arrachage.

La constitution de la résine dont est imprégnée la préforme et celle de la résine dont est imprégné le tissu fibreux sont telles que définies dans le procédé décrit précédemment.

La couche intermédiaire est quant à elle composée uniquement de résine, sans pli ou empilement de plis fibreux. La résine étant exempte d'agent durcisseur ou faiblement chargée en agent durcisseur, elle se polymérise donc peu lors de l'étape de polymérisation, à la température de polymérisation de la résine de la préforme.

Le dosage de l'agent durcisseur dans la constitution de la résine de la couche intermédiaire est défini de telle sorte que, une fois la pièce polymérisée, l'interface entre la structure et le tissu d'arrachage soit très peu polymérisée, mais suffisamment polymérisée pour que le tissu d'arrachage adhère légèrement sur la surface extérieure de la structure et ne se décolle pas volontairement sans aide extérieure. Eventuellement, le tissu d'arrachage présente un aspect sec en surface extérieure.

Dans un exemple de mise en oeuvre du procédé, la résine contenue dans la préforme et celle contenue dans la couche intermédiaire sont identiques. Elle ne diffère l'une de l'autre que par la présence ou l'absence de l'agent durcisseur.

La couche intermédiaire est déposée sur la surface du pli extérieur de la préforme, à l'emplacement où la pièce, une fois polymérisée, est destinée à être assemblée ultérieurement, par collage, avec une autre pièce.

Dans des exemples de mise en oeuvre, la couche intermédiaire est déposée sur tout ou partie de la surface du pli extérieur par dépôt d'un film de résine, par pulvérisation ou au moyen d'un pinceau.

Un tel procédé de réalisation de pièces est particulièrement intéressant en ce qu'il modifie peu le procédé classique associé existant tout en conférant à la pièce finale une propriété essentielle. Selon le procédé, la résine thermodurcissable contenue dans la préforme fibreuse est polymérisée à un taux supérieur ou égal à 75%.

L'invention concerne aussi un procédé de réalisation d'une pièce en matériau composite à renfort fibreux telle que précédemment décrite dans au moins l'un de ses modes de réalisation, comportant les étapes de :
- réalisation d'une préforme fibreuse sèche, obtenue essentiellement par un pli ou un empilement de plis non pré-imprégnés,
- dépôt d'un tissu fibreux pré-imprégné d'une résine non polymérisée et exempte d'agent durcisseur ou faiblement chargée en agent durcisseur, sur tout ou partie d'une surface d'un pli extérieur,
- imprégnation de la préforme fibreuse sèche par transfert d'une résine thermodurcissable formant la matrice,
- polymérisation de l'ensemble, préforme fibreuse et tissu fibreux, donc de la résine thermodurcissable contenue dans la préforme fibreuse.

A l'issue de l'étape de polymérisation, la préforme est maintenue dans la résine et constitue la structure de la pièce finale polymérisée et le tissu fibreux est lié à la structure et constitue le tissu d'arrachage. Un gradient de polymérisation est obtenu à l'interface entre la structure et le tissu d'arrachage.

La constitution de la résine thermodurcissable dont est imprégnée la préforme et celle de la résine dont est imprégné le tissu fibreux sont telles que définies dans les procédés décrits précédemment.

Un tel procédé de réalisation de pièces est particulièrement intéressant en ce qu'il modifie très peu le procédé classique existant (RTM ou LRI). Dans le cas où un tissu fibreux n'est pas présent dans le procédé classique, un tissu fibreux imprégné d'une résine exempte d'agent durcisseur ou faiblement chargée en agent durcisseur est ajouté à la surface de la préforme sèche. Dans le cas où un tissu fibreux est présent dans le procédé classique, il est remplacé par un tissu fibreux imprégné d'une résine exempte d'agent durcisseur ou faiblement chargée en agent durcisseur. Selon le procédé, la résine thermodurcissable contenue dans la préforme fibreuse est polymérisée à un taux supérieur ou égal à 75%.

En d'autres termes, quelque soit le procédé employé pour réaliser la pièce en matériau composite à renfort fibreux, on vient polymériser la pièce de façon classique tout en préservant à sa surface, et notamment aux emplacements où elle est destinée à être assemblée par collage à une autre pièce, une zone sous polymérisée, dite zone de collage. Pour cela, la résine de la couche intermédiaire ou du tissu fibreux, selon le procédé choisi, ne contient pas ou peu d'agent durcisseur. Lors de la polymérisation de la pièce, il apparaît une faible diffusion des molécules de l'agent durcisseur de la résine pré-imprégnant la préforme vers la résine du tissu fibreux et on obtient un gradient sur une faible épaisseur, quelques dizaines de µm. La zone de collage est ainsi confinée à l'interface entre la structure polymérisée et le tissu d'arrachage.

En résumé, à l'issue de l'étape de polymérisation, la pièce obtenue présente une structure polymérisée et une fine couche de résine très peu polymérisée, dite sous polymérisée, à la surface de la structure, à l'emplacement où la pièce doit être ultérieurement assemblée, et protégée par le tissu d'arrachage.

Le fait de pouvoir réaliser un gradient de polymérisation sur une faible épaisseur en surface constitue un avantage supplémentaire et extrêmement intéressant pour les pièces obtenues par les procédés de l'invention par rapport aux pièces obtenues par les procédés existants: les pièces obtenues peuvent être utilisées lors d'un procédé ultérieur de collage par co-cuisson desdites pièces. Au contraire des pièces obtenues avec les procédés existants, où on réalise nécessairement une polymérisation uniforme sur toute l'épaisseur de la pièce, c'est-à-dire avec un taux de polymérisation identique quelque soit le point où l'on se place dans l'épaisseur de la pièce, même à l'interface entre la structure et le tissu d'arrachage.

L'invention concerne aussi un procédé d'assemblage de deux pièces en matériau composite à renfort fibreux, les deux pièces étant telles que précédemment décrites dans au moins l'un des modes de réalisation. Le procédé comporte les étapes de :
- pelage du tissu d'arrachage de chaque pièce, de sorte à mettre à nu chaque zone de collage,
- positionnement des pièces de telle sorte que les zones de collage sont placées en vis-à-vis, en intercalant un film adhésif entre les deux zones de collage,
- mise en contact sous pression des deux pièces dans la zone de collage.
- polymérisation de l'ensemble.

Le film adhésif intercalé contient un agent durcisseur afin de fournir des molécules d'agent durcisseur nécessaires à la création de liaisons chimiques dans la résine sous polymérisée. Le film adhésif peut présenter sur chacune de ces faces un excès de durcisseur.

L'invention concerne aussi un procédé d'assemblage de deux pièces en matériau composite à renfort fibreux, une des deux pièces étant telle que précédemment décrit dans au moins l'un de ses modes de réalisation et la seconde pièce est une pièce à l'état de préforme fibreuse pré-imprégnée d'une résine thermodurcissable non polymérisée, ledit procédé comportant les étapes de :
- pelage du tissu d'arrachage de la pièce selon l'invention dans l'une de ses formes de réalisation, de sorte à mettre à nu la zone de collage,
- positionnement des pièces, de telle sorte que la zone de collage est placée en vis-à-vis de la seconde pièce, à l'emplacement où l'assemblage doit être réalisé,
- mise en contact sous pression des deux pièces dans la zone de collage,
- polymérisation de l'ensemble.

Les molécules de l'agent durcisseur sont apportées par la seconde pièce non polymérisée. La seconde pièce non polymérisée peut présenter sur la surface de collage un excès de durcisseur.

Dans un mode de mise en oeuvre du procédé, un film adhésif contenant un agent durcisseur est intercalé entre la zone de collage et la seconde pièce, lors de l'étape de positionnement des pièces,

Dans ce mode de réalisation, les molécules de l'agent durcisseur sont apportées par le film adhésif. L'adhésif peut présenter un excès de durcisseur sur la face en contact avec la pièce selon l'invention.

Quel que soit le procédé employé pour assembler deux pièces en matériau composite à renfort fibreux, lors de l'étape de pelage du tissu d'arrachage, des molécules de la résine sous polymérisée restent accrochées à la surface extérieure de la structure (la résine se cassant à l'endroit où elle présente le moins de résistance, c'est-à-dire l'endroit où elle est le moins polymérisée).

Ensuite, lors de l'étape de polymérisation, les molécules de l'agent durcisseur du film adhésif ou de la seconde pièce non polymérisée diffusent dans les zones qui n'en contiennent pas, des liaisons chimiques fortes vont se créer, jusqu'à parachever la polymérisation de l'ensemble.

De tels procédés peuvent se définir comme des procédés de collage par co-cuisson surfacique.

De tels procédés, en association avec les pièces de l'invention, permettent avantageusement de :
- se dispenser de la préparation de surface des pièces,
- faciliter et simplifier le stockage, la manipulation des pièces, et les outillages nécessaires pour assembler les pièces.

En d'autres termes, on garde toutes les facilités de mise en oeuvre du procédé de collage par "secondary bonding" tout en bénéficiant des avantages liés au procédé de collage par co-cuisson uniquement dans la ou les zone(s) de collage, telles que la tenue mécanique et la fiabilité des liaisons collées.

### Description des figures

L'invention sera maintenant plus précisément décrite dans le cadre de modes de réalisation particuliers, qui n'en sont nullement limitatifs, représentés sur les figures 1 à 6 illustrant :
Figure 1, une pièce selon l'invention,
Figure 2, une étape de drapage lors d'un procédé de réalisation de la pièce,
Figure 3, une étape de polymérisation de la pièce lors d'un procédé de réalisation de celle-ci,
Figure 4, une étape de pelage du tissu d'arrachage lors d'un procédé d'assemblage de deux pièces,
Figure 5, une étape de positionnement des deux pièces l'une par rapport à l'autre, lors d'un procédé d'assemblage de deux pièces,
Figure 6, l'étape de polymérisation des deux pièces assemblées lors d'un procédé d'assemblage de deux pièces.

### Description d'un mode préféré de réalisation

L'exemple de réalisation est décrit de manière détaillée dans son application au cas d'une pièce structurale d'aéronef. Ce choix n'est pas limitatif et peut s'étendre à toutes pièces réalisées en matériau composite.

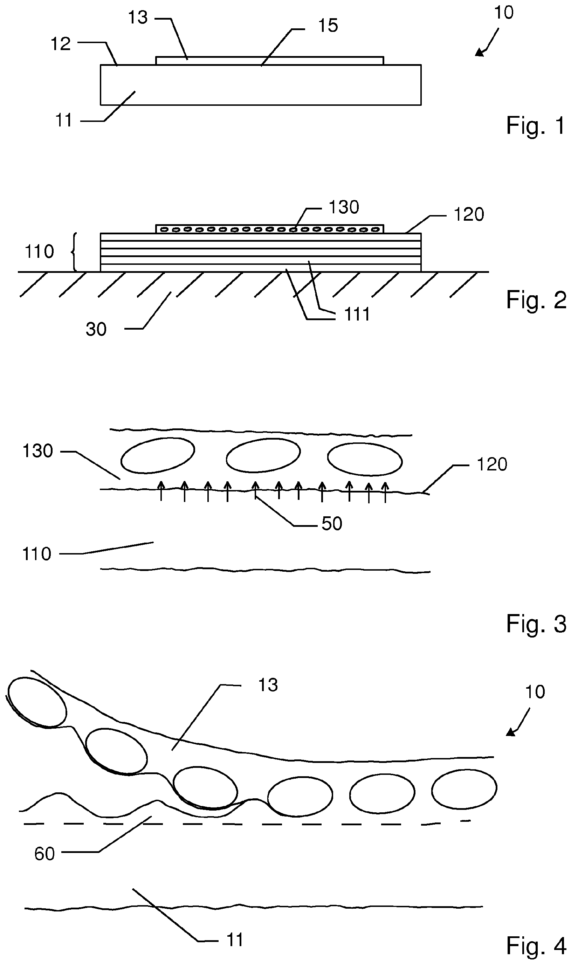

Une pièce 10 en matériau composite suivant l'invention, comme illustré sur la figure 1, comporte une structure 11, polymérisée, formée d'un ensemble de fibres maintenues dans une résine thermodurcissable.

La structure 11 peut présenter une forme quelconque. Elle peut être plane, comme sur la figure 1, ou présenter au moins une courbure.

La pièce 10 est destinée à être assemblée par collage avec une autre pièce pour former un ensemble structural tel qu'un panneau de fuselage raidi.

Elle comporte, sur tout ou partie d'une surface extérieure 12 de la structure, un tissu d'arrachage 13. Ce tissu d'arrachage est destiné à protéger tout ou partie de la surface extérieure 12 de la structure 11 jusqu'à l'opération ultérieure de collage. Ledit tissu est positionné et maintenu sur la surface extérieure 12 de la structure 11, à l'emplacement où la pièce est destinée à être ultérieurement assemblée à une autre pièce.

La pièce 10 présente, à une interface 15 entre le tissu d'arrachage 13 et la surface extérieure 12, une zone, de l'ordre de quelques dizaines de µm d'épaisseur, présentant un gradient de polymérisation. Le gradient de polymérisation est décroissant depuis la surface extérieure 12 de la structure 11 vers le tissu d'arrachage 13.

L'interface 15 entre la structure et le tissu d'arrachage est très peu polymérisée, mais suffisamment polymérisée pour que le tissu d'arrachage 13 adhère légèrement sur la surface extérieure 12 de la structure 11 et qu'il ne se décolle pas de manière intempestive.

Pour réaliser une telle pièce, trois procédés sont à présent décrits, à titre non restrictif.

### Premier exemple de procédé (figures 2 et 3)

Dans une première étape, une préforme 110 pré-imprégnée est réalisée.

La préforme 110 est définie de façon telle que la forme et le volume correspondent sensiblement à la forme et aux dimensions de la pièce 10 finale à réaliser.

La préforme est par exemple réalisée sur un moule 30, dont la forme et le volume correspondent sensiblement à la forme et aux dimensions de la pièce à réaliser.

La préforme 110 est réalisée par un seul pli 111, ou une superposition d'au moins deux plis 111, de fibres pré-imprégnées d'une résine non polymérisée.

La nature et les orientations des fibres dans le(s) pli(s) sont déterminées selon le type de sollicitations mécaniques auxquelles sera soumise la pièce, une fois celle-ci réalisée.

Lorsque la préforme est réalisée par une superposition de plis, la détermination du nombre de plis et orientations des fibres dans les plis successifs fait partie des techniques de calcul connues et non décrites ici.

Dans un exemple de mise en oeuvre, la préforme 110 comporte une superposition de fibres pré-imprégnées, par exemple des nappes unidirectionnelles, en carbone. La préforme pourrait également être constituée par exemple de fibres de verre ou fibres de kevlar.

Le(s) pli(s) 111 est(sont) pré-imprégné(s) d'une résine de type thermodurcissable, par exemple une résine époxy, avec un agent durcisseur.

Dans un exemple de mise en oeuvre, le(s) pli(s) 111 est(sont) imprégné(s) d'une résine époxy dont le monomère de base est principalement de type DGEBA (Diglycidyl éther de bisphénol A), TGPAP (Triglycidyl para aminophénol), ou TGMDA (Tétraglycidyl méthylène dianiline) et l'agent durcisseur est de type amine, tel que la diaminodiphényl sulfone (DDS).

Dans une deuxième étape, un tissu fibreux 130 pré-imprégné est déposé localement sur la préforme 110.

Le tissu fibreux comporte un pli ou une superposition de plis.

Dans un exemple de mise en oeuvre, le tissu fibreux 130 comporte une superposition de fibres pré-imprégnées, par exemple des fibres tissées.

Dans un exemple de mise en oeuvre, le tissu fibreux 130 comporte des fibres en polyester, en nylon ou en verre.

Le tissu fibreux 130 est déposé localement sur une surface 120 d'un pli extérieur de la préforme 110, à un emplacement où la pièce, une fois celle-ci réalisée, est destinée à être assemblée à une autre pièce, par collage.

Le tissu fibreux 130 est pré-imprégné d'une résine de type époxy, sans agent durcisseur ou très faiblement chargée en durcisseur.

Dans un exemple de mise en oeuvre, le tissu fibreux 130 est imprégné d'une résine époxy dont le monomère de base de la résine est principalement de type DGEBA, TGPAP ou TGMDA. L'agent durcisseur est par exemple de type amine, tel que le DDS.

Dans une troisième étape, une bâche à vide et des produits d'environnement sont mis en place autour de l'ensemble préforme-tissu fibreux.

Cette étape est classique en tant que telle et prépare l'ensemble à l'étape de polymérisation.

Dans une quatrième étape, l'ensemble préforme-tissu fibreux est polymérisé.

La bâche à vide est rendue étanche par des moyens connus. La mise sous vide de l'ensemble préforme-tissu fibreux est ensuite effectuée, ayant pour but de compacter l'ensemble préforme-tissu fibreux, notamment les plis. L'ensemble préforme-tissu fibreux est ensuite soumis à un traitement thermique, à une température, une durée et une pression déterminées.

Dans l'exemple préféré de la résine de type époxy, la résine est une résine thermodurcissable polymère dont la réticulation se fait à température ambiante ou à température élevée.

Lors de l'étape de polymérisation, la résine contenue dans la préforme se répand dans celle-ci en remplissant les zones de vide entre les fibres des différents plis. Le tissu fibreux quant à lui ne s'imprègne pas de la résine de la préforme puisqu'il est déjà pré-imprégné de sa propre résine.

Pendant le cycle de polymérisation, la viscosité des résines du tissu fibreux et de la préforme diminue avec l'augmentation de la température. Les molécules d'agent durcisseur ainsi que les chaines polymères contenues dans la résine de la préforme vont migrer dans la couche de résine exempte d'agent durcisseur ou faiblement chargée en agent durcisseur, comme illustré par les flèches 50 sur la figure 3. On observe alors la création et diffusion de chaines polymères entre la résine de la préforme et la résine du tissu fibreux.

Cette diffusion dans l'épaisseur se fera, au plus, sur quelques dizaines de µm, par exemple entre 1µm et 50µm.

Les paramètres faisant varier cette diffusion sont le temps, la température (paramètres qui conditionnent l'apparition de la gélification) et la viscosité. Tant que la gélification n'est pas atteinte, un temps plus long à la température donnant la viscosité la plus basse favorisera une plus longue diffusion.

A l'issue de la polymérisation, on obtient un gradient de polymérisation sur ces quelques dizaines de µm, à l'interface entre la structure 11 et le tissu d'arrachage 13.

L'ajout d'une faible quantité d'agent durcisseur dans la résine du tissu fibreux 130 permet d'augmenter sensiblement le taux de polymérisation dans le tissu d'arrachage 13, une fois la polymérisation achevée. On assure ainsi un maintien amélioré du tissu d'arrachage 13 à la surface extérieure 12 de la structure 11 de la pièce 10 jusqu'à l'opération de collage. Par la mise en oeuvre de l'étape de polymérisation selon l'invention, la résine contenue dans la préforme 110 est polymérisée à un taux au moins égale à 75%.

A l'issue de cette quatrième étape, la pièce 10 est démoulée, sans retirer le tissu d'arrachage 13. Après des éventuelles opérations de contrôle de la santé matière, ou de finitions par exemple des perçages ou des usinages, la pièce obtenue est susceptible d'être assemblée par collage à une autre pièce, comme illustrées sur les figures 4 à 6.

### Deuxième exemple de procédé

Ce deuxième procédé reprend les mêmes étapes que le premier procédé :
a) réalisation d'une préforme 110 fibreuse pré-imprégnée,
b) dépôt local d'un tissu fibreux 130 sur la préforme,
c) mise en place de la bâche à vide,
d) polymérisation,
mais diffère en ce que :
- le tissu fibreux 130 imprégné d'une résine exempte ou faiblement chargée d'agent durcisseur est remplacé par un tissu fibreux sec,
- il comporte une étape additionnelle, entre les étapes a) et b), de dépose d'une couche intermédiaire de résine exempte ou faiblement chargée d'agent durcisseur.

La couche intermédiaire est déposée, par exemple par pulvérisation, sur une surface d'un pli extérieur de la préforme 110.

A l'issue de la polymérisation, on obtient un gradient de polymérisation sur ces quelques dizaines de µm, à l'interface entre la structure 11 et le tissu d'arrachage 13.

### Troisième exemple de procédé

Dans une première étape, une préforme 110 fibreuse sèche est réalisée.

Comme pour le premier exemple de procédé, la préforme 110 fibreuse est réalisée par un pli ou une superposition d'au moins deux plis. Cette fois-ci, les plis ne sont pas imprégnés de résine.

La préforme 110 fibreuse comporte des fibres sèches dont la nature et les orientations sont également déterminées selon un critère prédéterminé (chargement mécanique,...).

La préforme 110 fibreuse est par exemple placée à l'intérieur d'un moule, dont la forme et le volume correspondent sensiblement à la forme et aux dimensions de la pièce à réaliser.

Dans une deuxième étape du procédé, un tissu fibreux 130 pré-imprégné d'une résine exempte ou faiblement chargée d'agent durcisseur est déposé localement sur la préforme.

Dans une troisième étape du procédé, l'ensemble préforme-tissu fibreux est confiné dans une enceinte hermétiquement fermée pour y créer ultérieurement les conditions nécessaires à une polymérisation.

L'enceinte hermétiquement fermée est délimitée par exemple par un ensemble moule-contre moule ou une bâche à vide entourant l'ensemble préforme-tissu fibreux.

Dans une quatrième étape du procédé, une résine thermodurcissable avec agent durcisseur est injectée dans l'enceinte hermétiquement fermée délimitée par le moule ou la bâche à vide.

La résine est injectée au travers d'ouvertures réalisées dans le moule-contre moule ou la bâche à vide. La résine est injectée de sorte à se répandre uniformément dans l'enceinte fermée. Plus précisément, la résine se répand dans la préforme en remplissant les zones de vide entre les fibres sèches des différents plis de la préforme.

Le débit d'injection est réglé de sorte à ne pas chasser la résine contenu dans le tissu fibreux.

Dans une cinquième étape, l'ensemble préforme-tissu fibreux est polymérisé. Cette étape est identique à celle décrite dans le premier exemple de procédé.

A l'issue de la polymérisation, on obtient un gradient de polymérisation sur ces quelques dizaines de µm, à l'interface entre la structure 11 et le tissu d'arrachage 13.

Les pièces 10 obtenues par l'un quelconque des procédés précédemment décrits sont polymérisées, sauf à l'interface entre la structure 11 et le tissu d'arrachage 13 où une zone sous polymérisée est présente. De telles pièces, de part cette zone sous polymérisée, peuvent être avantageusement assemblées entre elles par un procédé de collage par co-cuisson.

Les figures 4 à 6 illustrent les différentes étapes nécessaires à l'assemblage des deux pièces selon l'invention.

Dans une première étape (figure 4), le tissu d'arrachage 13 de chaque pièce 10 est retiré par pelage.

Chaque tissu d'arrachage 13 est retiré de sorte à mettre à nu la zone sous polymérisée, ou zone de collage. La rupture se produit dans les zones peu résistantes c'est-à-dire à l'endroit où le taux de polymérisation est le plus bas.

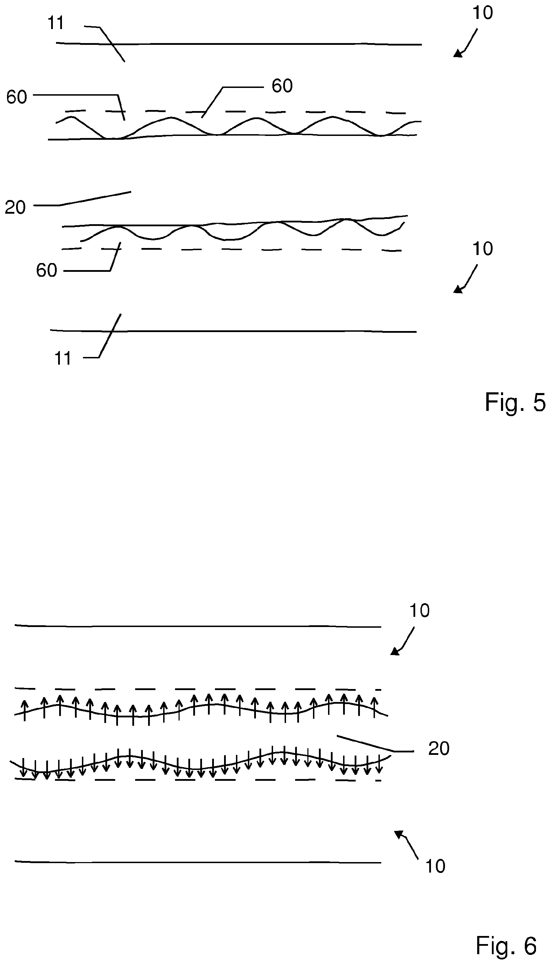

Lors de ce retrait, de la résine du tissu d'arrachage 13 reste accrochée à la surface de la structure illustrée par la référence 60 sur les figures 4 et 5.

Dans une deuxième étape, les deux pièces 10 sont positionnées l'une par rapport à l'autre.

Les deux pièces 10 sont positionnées de telle sorte que les zones de collage sont placées en vis-à-vis.

Un film adhésif 20 est intercalé entre les deux zones de collage. Ledit film adhésif est constitué d'une résine thermodurcissable avec agent durcisseur. L'adhésif peut présenter sur chacune de ces faces un excès de durcisseur. Un tel film adhésif est nécessaire afin de fournir des molécules d'agent durcisseur nécessaires à la polymérisation ultérieure de la résine sous polymérisée accrochée à la structure 11. Un tel film adhésif 20 permet également de combler un éventuel écart entre les deux zones de collage en contact.

Dans un exemple de réalisation, le film d'adhésif 20 est à base de résine de type époxy.

Les deux pièces sont ensuite mises en contact sous pression dans la zone de collage.

Dans une troisième étape, l'ensemble pièces-film adhésif est confiné dans une enceinte hermétiquement fermée pour y créer ultérieurement les conditions nécessaires à une polymérisation.

Dans une quatrième étape, l'ensemble pièces-film adhésif est polymérisé.

Pendant cette étape, la résine du film adhésif 20 et la résine sous polymérisée de chaque pièce 10 se liquéfient (diminution de la viscosité due à l'augmentation de la température dans l'enceinte fermée). Les molécules d'agent durcisseur contenues dans le film adhésif 20 ainsi que les chaines polymères du film adhésif et de la couche de résine sous polymérisée 60 vont migrer et inter-diffuser.

Ces nouvelles chaines se lient aux chaines polymères déjà présentes dans la couche de résine sous polymérisée et permettent la densification du réseau tri-dimensionnel constitué par les chaines polymères, jusqu'à polymérisation complète de l'interface résine de la pièce et du film adhésif.

Cette opération s'effectue simultanément de part et d'autre du film adhésif 20.

On obtient ainsi une liaison complètement polymérisée entre les deux pièces 10, avec création d'un réseau tridimensionnel continu de chaînes polymères entre lesdites deux pièces.

A l'issue de cette polymérisation, l'ensemble peut être considéré comme une seule pièce, comme pour tout ensemble réalisé par un procédé de collage par co-cuisson classique.

Il va de soi que les pièces 10 de l'invention peuvent également être assemblées avec une pièce non polymérisée, par le même procédé.

Dans ce cas, lors de l'étape de positionnement, la zone de collage de la pièce 10 est placée en vis-à-vis de la pièce non polymérisée, à l'emplacement où l'assemblage doit être réalisé. L'introduction du film adhésif est optionnelle, les molécules d'agent durcisseur étant contenues dans la pièce non polymérisées.

Les mêmes avantages que ceux d'un procédé de collage par co-cuisson classique sont obtenus, à savoir :
- pas d'opération de préparation de surface des pièces avant leur assemblage,
- liaison insensible à une faible pollution de surface avant le collage,
- bonne tenue mécanique du fait de l'utilisation du film adhésif entre les deux pièces.

De plus, les mêmes avantages que ceux d'un procédé de collage par « secondary bonding » classique sont obtenus, à savoir :
- simplification des outillages de polymérisation et de collage,
- possibilité de chauffer localement les zones de collage sans chauffer l'ensemble des pièces.

- simplification des contrôles non destructifs (contrôle aisé de chacune des pièces élémentaires avant assemblage),
- stockage et manipulation aisée.

L'invention proposée permet avantageusement de réaliser une pièce pré-polymérisée adaptée à un procédé de collage par co-cuisson.

## Revendications

1. Pièce (10) en matériau composite à renfort fibreux comportant une structure (11) formée d'un ensemble de fibres maintenues dans une résine thermodurcissable et un tissu d'arrachage (13) sur tout ou partie d'une surface extérieure (12) de ladite structure, **caractérisée en ce que** ladite pièce présente un gradient de polymérisation au niveau d'une interface (15) entre la structure (11) et le tissu d'arrachage (13).

2. Procédé de réalisation d'une pièce (10) en matériau composite à renfort fibreux selon la revendication 1, comportant les étapes de :
- réalisation d'une préforme (110) fibreuse pré-imprégnée d'une résine thermodurcissable non polymérisée,
- dépôt d'un tissu fibreux (130) pré-imprégné d'une résine non polymérisée et exempte d'agent durcisseur ou faiblement chargée en agent durcisseur, sur tout ou partie d'une surface (120) d'un pli extérieur de la préforme,
- polymérisation de l'ensemble, et donc de la résine thermodurcissable contenue dans la préforme (110) fibreuse à un taux supérieur ou égal à 75%.

3. Procédé de réalisation d'une pièce (10) en matériau composite à renfort fibreux selon la revendication 1, comportant les étapes de :
- réalisation d'une préforme (110) fibreuse pré-imprégnée d'une résine thermodurcissable non polymérisée,
- dépôt d'une couche intermédiaire de résine, ladite résine étant non polymérisée et exempte d'agent durcisseur ou faiblement chargée en agent durcisseur, sur tout ou partie d'une surface d'un pli extérieur de la préforme,
- dépôt d'un tissu fibreux (130) sec sur la couche intermédiaire de résine,
- polymérisation de l'ensemble, et donc de la résine thermodurcissable contenue dans la préforme (110) fibreuse à un taux supérieur ou égal à 75%.

4. Procédé de réalisation d'une pièce (10) en matériau composite à renfort fibreux selon la revendication 1, comportant les étapes de :
- réalisation d'une préforme (110) fibreuse sèche,
- dépôt d'un tissu fibreux (130) pré-imprégné d'une résine non polymérisée et exempte d'agent durcisseur ou faiblement chargée en agent durcisseur, sur tout ou partie d'une surface (120) d'un pli extérieur de la préforme,
- imprégnation de la préforme (110) fibreuse par transfert d'une résine thermodurcissable formant matrice,
- polymérisation de l'ensemble, et donc de la résine thermodurcissable contenue dans ladite préforme fibreuse à un taux supérieur ou égal à 75%.

5. Procédé d'assemblage de deux pièces (10) en matériau composite à renfort fibreux, lesdites deux pièces étant conformes à la revendication 1, ledit procédé comportant les étapes de :
- pelage du tissu d'arrachage (13) de chaque pièce (10), de sorte à mettre à nu une zone sous polymérisée, dite zone de collage, pour chaque pièce,
- positionnement des pièces (10) de telle sorte que les zones de collage sont placées en vis-à-vis, en intercalant un film adhésif (20) entre les deux zones de collage,
- mise en contact sous pression des deux pièces dans la zone de collage,
- polymérisation de l'ensemble.

6. Procédé d'assemblage de deux pièces en matériau composite à renfort fibreux, une (10) des deux pièces étant conforme à la revendication 1 et la seconde pièce est une pièce à l'état de préforme fibreuse pré-imprégnée d'une résine thermodurcissable non polymérisée, ledit procédé comportant les étapes de :
- pelage du tissu d'arrachage (13) de la pièce conforme à la revendication 1, de sorte à mettre à nu une zone sous polymérisée, dite zone de collage,
- positionnement des pièces, de telle sorte que la zone de collage est placée en vis-à-vis de la seconde pièce, à l'emplacement où l'assemblage doit être réalisé,
- mise en contact sous pression des deux pièces dans la zone de collage,
- polymérisation de l'ensemble.

7. Procédé selon la revendication 6 dans lequel un film adhésif (20) est intercalé entre la zone de collage et la seconde pièce, lors de l'étape de positionnement des pièces.

## Patentansprüche

1. Teil (10) aus einem faserverstärkten Verbundwerkstoff, das eine Struktur (11), die aus einer Anordnung von Fasern gebildet ist, die in einem wärmehärtbaren Harz gehalten sind, und ein Abreißgewebe (13) über der gesamten oder einem Teil einer Außenfläche (12) der Struktur aufweist, **dadurch gekennzeichnet, dass** das Teil einen Polymerisationsgradienten im Bereich einer Grenzfläche (15) zwischen der Struktur (11) und dem Abreißgewebe (13) aufweist.

2. Verfahren zur Herstellung eines Teils (10) aus einem faserverstärkten Verbundwerkstoff nach Anspruch 1, das folgende Schritte umfasst:
- Herstellen eines Faservorformlings (110), das mit einem nicht polymerisierten wärmehärtbaren Harz vorimprägniert ist,
- Aufbringen eines Fasergewebes (130), das mit einem nicht polymerisierten Harz vorimprägniert ist, das kein Härtungsmittel aufweist oder wenig Härtungsmittel aufweist, auf einer gesamten oder einem Teil einer Fläche (120) einer Außenlage des Vorformlings,
- Polymerisieren der Anordnung und somit des wärmehärtbaren Harzes, das in dem Faservorformling (110) enthalten ist, auf einen Grad von größer gleich 75% .

3. Verfahren zur Herstellung eines Teils (10) aus einem faserverstärkten Verbundwerkstoff nach Anspruch 1, das folgende Schritte umfasst:
- Herstellen eines Faservorformlings (110), das mit einem nicht polymerisierten wärmehärtbaren Harz vorimprägniert ist,
- Aufbringen einer Harzzwischenschicht, wobei das Harz nicht polymerisiert ist und kein Härtungsmittel aufweist oder wenig Härtungsmittel aufweist, auf einer gesamten oder einem Teil einer Fläche einer Außenlage des Vorformlings,
- Aufbringen eines trockenen Fasergewebes (130) auf der Harzzwischenschicht,
- Polymerisieren der Anordnung und somit des wärmehärtbaren Harzes, das in dem Faservorformling (110) enthalten ist, auf einen Grad von größer gleich 75% .

4. Verfahren zur Herstellung eines Teils (10) aus einem faserverstärkten Verbundwerkstoff nach Anspruch 1, das folgende Schritte umfasst:
- Herstellen eines trockenen Faservorformlings (110) ,
- Aufbringen eines Fasergewebes (130), das mit einem nicht polymerisierten Harz vorimprägniert ist, das kein Härtungsmittel aufweist oder wenig Härtungsmittel aufweist, auf einer gesamten oder einem Teil einer Fläche (120) einer Außenlage des Vorformlings,
- Imprägnieren des Faservorformlings (110) durch Einbringen eines eine Matrix bildenden wärmehärtbaren Harzes,
- Polymerisieren der Anordnung und somit des wärmehärtbaren Harzes, das in dem Faservorformling enthalten ist, auf einen Grad von größer gleich 75%.

5. Verfahren zum Zusammensetzen von zwei Teilen (10) aus einem faserverstärkten Verbundwerkstoff, wobei die beiden Teile Anspruch 1 entsprechen, wobei das Verfahren folgende Schritte umfasst:
- Abziehen des Abreißgewebes (13) von jedem Teil (10), damit ein als Klebebereich bezeichneter unterpolymerisierter Bereich für jedes Teil freigelegt wird,
- Positionieren der Teile (10) derart, dass die Klebebereiche einander gegenüber platziert sind, wobei eine Klebefolie (20) zwischen den beiden Klebebereichen angeordnet wird,
- Druckkontaktieren der beiden Teile im Klebebereich,
- Polymerisieren der Anordnung.

6. Verfahren zum Zusammensetzen von zwei Teilen aus einem faserverstärkten Verbundwerkstoff, wobei eines (10) der beiden Teile Anspruch 1 entspricht und das zweite Teil ein Teil im Zustand eines Faservorformlings ist, der mit einem nicht polymerisierten wärmehärtbaren Harz vorimprägniert ist, wobei das Verfahren folgende Schritte umfasst:
- Abziehen des Abreißgewebes (13) von dem Teil, das Anspruch 1 entspricht, damit ein als Klebebereich bezeichneter unterpolymerisierter Bereich freigelegt wird,
- Positionieren der Teile derart, dass der Klebebereich gegenüber dem zweiten Teil an der Stelle platziert ist, wo das Zusammensetzen erfolgen soll,
- Druckkontaktieren der beiden Teile im Klebebereich,
- Polymerisieren der Anordnung.

7. Verfahren nach Anspruch 6, wobei in dem Schritt des Positionierens der Teile eine Klebefolie (20) zwischen dem Klebebereich und dem zweiten Teil angeordnet wird.

## Claims

1. Fibre-reinforced composite material part (10) comprising a structure (11) formed of an assembly of fibres held in a thermosetting resin and a peel ply (13) over all or some of an outer surface (12) of said structure, **characterized in that** said part has a polymerization gradient at an interface (15) between the structure (11) and the peel ply (13).

2. Process for producing a fibre-reinforced composite material part (10) according to Claim 1, comprising the steps of:
- producing a fibrous preform (110) preimpregnated with an unpolymerized thermosetting resin,
- depositing a fibrous fabric (130) preimpregnated with an unpolymerized resin and free of curing agent or lightly laden with curing agent, over all or some of a surface (120) of an outer ply of the preform,
- polymerizing the assembly, and therefore the thermosetting resin contained in the fibrous preform (110) to a degree greater than or equal to 75%.

3. Process for producing a fibre-reinforced composite material part (10) according to Claim 1, comprising the steps of:
- producing a fibrous preform (110) preimpregnated with an unpolymerized thermosetting resin,
- depositing an intermediate resin layer, said resin being unpolymerized and free of curing agent or lightly laden with curing agent, over all or some of a surface of an outer ply of the preform,
- depositing a dry fibrous fabric (130) on the intermediate resin layer,
- polymerizing the assembly, and therefore the thermosetting resin contained in the fibrous preform (110) to a degree greater than or equal to 75%.

4. Process for producing a fibre-reinforced composite material part (10) according to Claim 1, comprising the steps of:
- producing a dry fibrous preform (110),
- depositing a fibrous fabric (130) preimpregnated with an unpolymerized resin and free of curing agent or lightly laden with curing agent, over all or some of a surface (120) of an outer ply of the preform,
- impregnating the fibrous preform (110) by transfer of a thermosetting resin forming the matrix,
- polymerizing the assembly, and therefore the thermosetting resin contained in said fibrous preform to a degree greater than or equal to 75%.

5. Process for assembling two fibre-reinforced composite material parts (10), said two parts being according to Claim 1, said process comprising the steps of:
- peeling the peel ply (13) from each part (10), so as to bare an under-polymerized zone, referred to as a bonding zone, for each part,
- positioning the parts (10) so that the bonding zones are placed opposite, inserting an adhesive film (20) between the two bonding zones,
- pressurized contacting of the two parts in the bonding zone,
- polymerizing the assembly.

6. Process for assembling two fibre-reinforced composite material parts, one (10) of the two parts being according to Claim 1 and the second part is a part in the state of a fibrous preform preimpregnated with an unpolymerized thermosetting resin, said process comprising the steps of:
- peeling the peel ply (13) from the part according to claim 1, so as to bare an under-polymerized zone, referred to as a bonding zone,
- positioning the parts, so that the bonding zone is placed opposite the second part, at the location where the assembling should be carried out,
- pressurized contacting of the two parts in the bonding zone,
- polymerizing the assembly.

7. The process according to Claim 6, wherein an adhesive film (20) is inserted between the bonding zone and the second part, during the step of positioning the parts.
